# EUROPÄISCHE PATENTSCHRIFT

(11) **EP 1 078 832 B1**
(45) Veröffentlichungstag und Bekanntmachung des Hinweises auf die Patenterteilung: **02.10.2002**
(21) Anmeldenummer: 00113548.2
(22) Anmeldetag: 27.06.2000
(51) Int. Cl.: B60T 8/32, B60T 13/74

(54) **Bremsvorrichtung, insbesondere für Nutzfahrzeuge**
Braking device, particularly for an industrial vehicle
Dispositif de freinage, en particulier pour un véhicule industriel

(30) Priorität: 26.08.1999 DE 19940529
(43) Veröffentlichungstag der Anmeldung: 28.02.2001
(73) Patentinhaber: DaimlerChrysler AG, 70567 Stuttgart (DE)
(72) Erfinder: Fischer, Jörg, 73733 Esslingen (DE); Frey, Gerhard, 73733 Esslingen (DE); Grieb, Martin, 73035 Göppingen-Faurndau (DE); Reichle, Stephan, 73770 Denkendorf (DE); Schäfer, Ralf, 70186 Stuttgart (DE); Wippermann, Michael, 70794 Filderstadt (DE)

(56) Entgegenhaltungen:
- DE-A- 19 631 856
- US-A- 4 658 939
- US-A- 5 390 992
- US-A- 5 421 643
- US-A- 5 496 096

## Beschreibung

Die Erfindung betrifft eine Bremsvorrichtung, insbesondere für Nutzfahrzeuge, nach der Gattung des Anspruchs 1.

Derartige Bremsvorrichtungen für Nutzfahrzeuge gehen beispielsweise aus der DE 36 17 356 sowie aus der DE 38 18 617 C2 hervor.

Bei diesen Bremsvorrichtungen für Nutzfahrzeuge wird ein pneumatischer Energievorrat, der in einem Energiespeicher in Form eines Druckmittelspeichers gespeichert ist, zur Betätigung von Radbremseinheiten verwendet. Hierzu werden Ventile mit pneumatischen oder elektrischen Steuersignalen beaufschlagt, welche aus der aktuellen Fahr- und Beladungssituation sowie dem Bremswunsch des Fahrers abgeleitet sind. Diese mit dem pneumatischen Energievorrat verbundenen Ventilanordnungen leiten einen dem Steuersignal entsprechenden Bremsdruck an die Bremszylinder weiter, in welchen der Druck in eine mechanische Auslenkung zur Betätigung der Radbremse umgesetzt wird.

Darüber hinaus sind auch elektrisch betätigte Bremseinrichtungen bekannt, mit denen die zur Betätigung der Radbremse erforderlichen mechanischen Auslenkungen direkt in Abhängigkeit von elektrischen Steuersignalen erzeugt werden. Derartige Bremseinrichtungen gehen beispielsweise aus der deutschen Zeitschrift "mot" 20/1995, Seite 46, hervor.

Bremsvorrichtungen für Nutzfahrzeuge, die ausschließlich über pneumatische Energievorräte betätigt werden, erfordern aufwendige Ventileinheiten, die wiederum hohe Komponentenkosten und einen großen Bauraumbedarf sowie einen hohen Installations- und Prüfaufwand nach sich ziehen.

Demgegenüber sind bei rein elektrisch betätigten Bremsvorrichtungen an allen Achsen eines Zugfahrzeugs umfangreiche Erweiterungen des elektrischen Bordnetzes, beispielsweise eine doppelte Spannungsversorgung, erforderlich. Darüber hinaus ist die Zulassungsfähigkeit sowie die Marktakzeptanz derartiger Bremsvorrichtungen derzeit problematisch.

Aus der US 4, 658, 939 geht eine Bremsvorrichtung hervor, die zusätzlich zu einem elektrischen Bremssystem ein zweites Bremssystem vorsieht, das als mechanisches oder hydraulisches Bremssystem ausgestaltet sein kann. Die elektrisch betätigten Radbremseinrichtungen sind allen vier Rädern zugeordnet.

Die DE 196 31 856 A1 zeigt eine elektromechanische Bremsvorrichtung, die weder pneumatisch noch hydraulisch betätigte Radbremseinrichtungen aufweist.

Aufgabe der Erfindung ist es daher, eine Bremsvorrichtung, insbesondere für Nutzfahrzeuge, der eingangs beschriebenen Art dahingehend weiterzubilden, dass sie ein hohes Maß an Sicherheit bietet.

Diese Aufgabe wird durch die Merkmale des Anspruchs 1 gelöst.

Die erfindungsgemäße Bremsvorrichtung weist den großen Vorteil auf, dass sowohl eine Druckmittelbremseinrichtung, deren Betätigungsenergie einem Druckmittelspeicher als auch eine elektrische Bremseinrichtung, deren Betätigungsenergie einem elektrischen Energiespeicher entnommen wird, vorgesehen ist. Hierdurch wird nicht nur der Installations- und Prüfaufwand verringert, es stehen insbesondere auch unterschiedliche Energiespeicher zur Verfügung, durch die die beiden Bremseinrichtungen unabhängig voneinander betätigbar sind, so dass beim Ausfall einer Bremseinrichtung immer noch eine zweite Bremseinrichtung, die von einem von der ersten Bremseinrichtung unabhängigen Energievorrat gespeist wird, einsetzbar ist. Durch die an der Hinterachse vorgesehenen, mit elektrischer Energie betätigten Radbremseinrichtungen, kann eine hohe Regelgüte für die Bremsregelung an der Hinterachse erreicht werden, was insbesondere beim Einsatz von Fahrdynamiksystemen wie ABS, ASR oder ESP eine sehr gute Fahrstabilität gewährleistet.

Durch die erfindungsgemäße Bremsvorrichtung entfallen darüber hinaus auch umfangreiche Erweiterungen des elektrischen Bordnetzes, wie z.B. eine doppelte Spannungsversorgung, da bei einem Ausfall des Bordnetzes eine Bremsung auf pneumatischem Wege ohne weiteres möglich ist.

Vorteilhafte Ausführungsformen der Erfindung sind Gegenstand der Unteransprüche.

Vorzugsweise können dabei Steuersignale zur Betätigung der Radbremseinheiten an der wenigstens einen Achse, deren Betätigungsenergie aus dem pneumatischen Energiespeicher entnommen wird, in Abhängigkeit von der Stellung eines Bremspedals generiert und mittels eines pneumatischen Mediums an die Radbremseinheiten übertragen werden.

Ferner kann vorgesehen sein, dass die Steuersignale einem elektropneumatischen Anhängersteuerventil zuführbar sind, wobei die Steuersignale in diesem Fall den Steuersignalen entsprechen können, welche den Radbremseinheiten zugeführt werden, deren Betätigungsenergie einem elektropneumatischen Energiespeicher entnommen wird.

Darüber hinaus ist vorzugsweise vorgesehen, dass Steuersignale zur Betätigung der Radbremseinheiten, deren Betätigungsenergie dem elektrischen Energiespeicher entnommen wird, in Abhängigkeit von der Stellung des Bremspedals in einer Steuereinrichtung generiert, als elektrische Signale an radweise angeordnete Ventilanordnungen übertragen und in pneumatische Steuersignale umgewandelt werden, durch die die Radbremseinheiten, deren Betätigungsenergie aus dem pneumatischen Energiespeicher entnommen wird, betätigbar sind.

Um auch in Notsituationen eine Bremsung des Fahrzeugs zu ermöglichen, ist bei einem Ausführungsbeispiel ein redundanter Pfad zur Generierung pneumatischer Steuersignale zur Betätigung der Radbremseinheiten der wenigstens einen Achse vorgesehen, deren Betätigungsenergie dem elektrischen Energiespeicher entnommen wird.

Um dabei auch ein Anhängerfahrzeug sicher abbremsen zu können, ist bei einer vorteilhaften Ausführungsform ferner vorgesehen, dass das dem elektropneumatischen Anhängersteuerventil zugeführte redundante pneumatische Steuersignal dem Steuersignal entspricht, welches im Fehlerfall der wenigstens einen Achse mit den Radbremseinheiten zugeführt wird, deren Betätigungsenergie einem pneumatischen Energiespeicher entnommen wird.

Weitere Vorteile und Merkmale der Erfindung sind Gegenstand der nachfolgenden Beschreibung von Ausführungsbeispielen der Erfindung in Verbindung mit der Zeichnung.

In der Zeichnung zeigen:
- Fig. 1: ein erstes Ausführungsbeispiel einer erfindungsgemäßen Bremsvorrichtung und
- Fig. 2: ein zweites Ausführungsbeispiel einer erfindungsgemäßen Bremsvorrichtung.

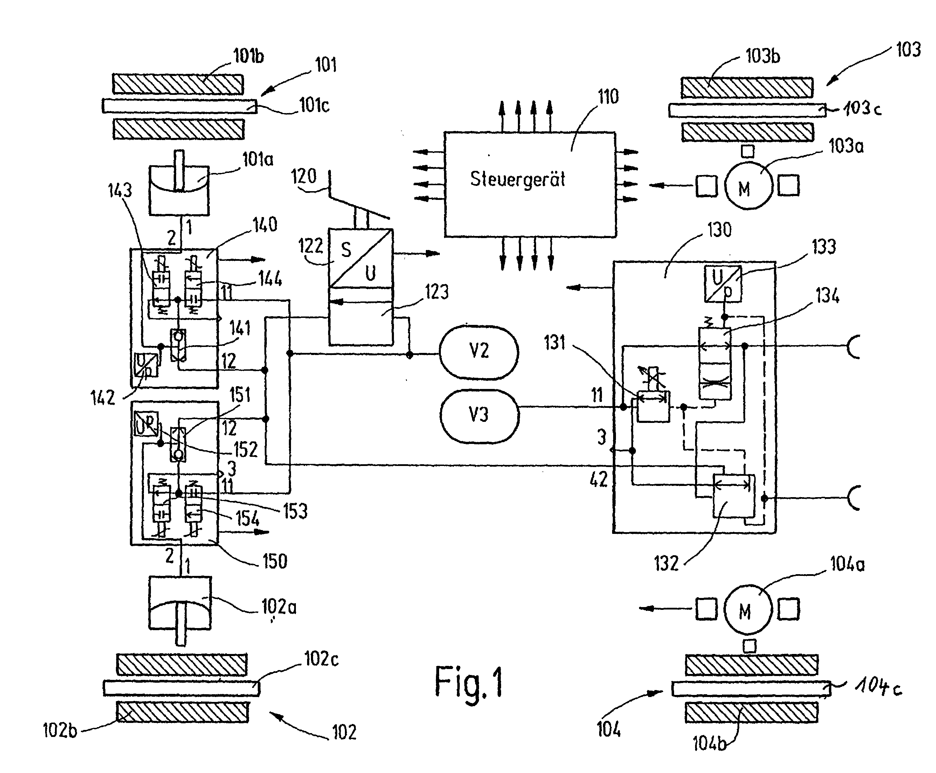

Eine Bremsvorrichtung für ein Nutzfahrzeug, dargestellt in Fig. 1 umfasst zwei Radbremsen, beispielsweise Scheibenbremsen mit Bremsscheiben 101c bzw. 102c und Bremsbelägen 101b bzw. 102b, die durch Radbremszylinder 101a, 102a betätigbar sind. Die Radbremsen und die ihnen jeweils zugeordneten Radbremszylinder 101a bzw. 102a bilden zusammen Radbremseinheiten 101 bzw. 102, deren Betätigungsenergie einem pneumatischen Energiespeicher V2 entnommen wird. Ferner sind durch elektrische Aktuatoren, beispielsweise Elektromotoren 103a bzw. 104a ansteuerbare Radbremsen beispielsweise ebenfalls Scheibenbremsen, umfassend Bremsscheiben 103c bzw. 104c und Bremsbeläge 103b bzw. 104b vorgesehen. Die Radbremsen 103b, 103c bzw. 104b, 104c und die ihnen zugeordneten Elektromotoren 103a bzw. 104a bilden Radbremseinheiten 103 bzw. 104, deren Betätigungsenergie einem elektrischen Energiespeicher, beispielsweise einer nicht dargestellten Batterie entnommen wird. Wie in Fig. 1 schematisch dargestellt, sind jeweils die Radbremseinheiten 101 bzw. 102, deren Betätigungsenergie dem pneumatischen Energiespeicher V2 entnommen wird, vorzugsweise einer Achse zugeordnet, wohingegen die Radbremseinheiten 103 bzw. 104, deren Betätigungsenergie dem elektrischen Energiespeicher entnommen wird, einer anderen Achse zugeordnet sind.

Die Bremsvorrichtung umfasst ferner eine Steuereinrichtung oder ein Steuergerät 110, den Radbremseinheiten 101 bzw. 102, deren Betätigungsenergie dem pneumatischen Energiespeicher V2 entnommen wird, zugeordnete Ventilanordnungen 140 bzw. 150 sowie ein elektropneumatisch ansteuerbares Anhängersteuerventil 130. Ferner ist mit einem Bremspedal 120 ein Wegsensor 122 verbunden, dessen Ausgangssignale dem Steuergerät 110 zugeführt werden.

In Fig. 1 sind sämtliche pneumatischen Leitungen als Striche dargestellt und mit an sich bekannten Zahlen versehen, wobei die erste Ziffer bedeutet:
1 Energiezufluss
2 Energieabfluss (nicht jedoch Abfluss zur Atmosphäre)
3 Anschluss Atmosphäre
4 Steueranschluss.

Mit 11, 12 sind beispielsweise unterschiedliche Energiezuflussleitungen, mit 42 ist eine Steuerleitung bezeichnet.

Die elektrischen Signalleitungen sind lediglich durch Pfeile angedeutet, wobei es sich versteht, dass das Steuergerät 110 sowohl Signale empfangen kann, beispielsweise vom Wegsensor 122 sowie von den beiden Elektromotoren 103a bzw. 104a, als auch Signale senden oder abgeben kann, beispielsweise an die beiden Elektromotoren 103a, 104a.

Bei einer Betätigung des Bremspedals 120 werden die beiden Bremszylinder 101a bzw. 102a durch ein Ventil 123 mit einem der Pedalstellung des Bremspedals 120 entsprechenden Druck beaufschlagt. Dabei befinden sich die Ventile der Ventileinheiten 140 bzw. 150 in ihrer in Fig. 1 gezeigten Stellung, d.h. es strömt Druckluft durch Wechselventile mit Rückströmung 141 bzw. 152 direkt über den Energieausgang 2 in den Energieeingang 1 der beiden Bremskolben 101a bzw. 102a. Der Druck wird dabei durch Drucksensoren 142 bzw. 152 erfasst, deren Ausgangssignale dem Steuergerät 110 zugeführt werden.

Zwei 2/2-Wegeventile 143, 144 bzw. 153, 154 stehen dabei in der in Fig. 1 gezeigten Stellung, d.h. der Energieeingang 11 der beiden Ventileinheiten 140 bzw. 150 ist abgesperrt. Um sehr schnell Druck in die Radbremszylinder 101a bzw. 102a einzuschießen, werden die Ventile 144 bzw. 154 in Offenstellung geschaltet, wohingegen die Ventile 143 bzw. 153 in Schließstellung geschaltet werden. In diesem Falle strömt Druck über die Wechselventile mit Rückströmung 141 bzw. 151 in die Bremszylinder 101a bzw. 102a, so dass die Bremsbeläge 101b, 102b jeweils mit einer Bremskraft auf die Bremsscheiben 102c bzw. 101c gedrückt werden.

Auch in diesem Falle wird der Druck von den Drucksensoren 142 bzw. 152 überwacht. Dieser Nebensteuerkreis stellt eine "grobe" (Einschießen von Vorratsdruck) Bremsdruckstufung dar, wohingegen der obenbeschriebene Hauptsteuerkreis eine "feine" Bremsdruckstufung darstellt.

Wie in Fig. 1 dargestellt, ist die vom Ventil 123 abgezweigte Leitung, die den Energieeingängen 12 der beiden Ventileinheiten 140 bzw. 150 zugeführt ist, über eine Steuerleitung 42 mit einem elektropneumatischen Anhängersteuerventil 130 verbunden, so dass das Steuersignal des elektropneumatischen Anhängersteuerventils dem Steuersignal entspricht, das den beiden Radbremseinheiten 101, 102 zugeführt wird, deren Betätigungsenergie dem pneumatischen Energiespeicher 102 entnommen wird. Das elektropneumatische Anhängersteuerventil 130 umfasst ein Proportionalventil 131, welches abhängig von Steuersignalen, die von der Steuereinheit 110 erzeugt werden, ein Relaisventil 132 ansteuert. Bei einem Bremsvorgang wird das Relaisventil 132 durch das Proportionalventil 131 mit einem pneumatischen Energiespeicher V3 verbunden und aktiviert über die pneumatische Schnittstelle des Kupplungskopfes die Bremsen des Anhängerfahrzeugs. Die Stellung des Relaisventils 132 wird durch einen Drucksensor 133 erfasst und an das Steuergerät 110 ausgegeben, welches seinerseits wieder Steuersignale an das Proportionalitätsventil 131 abhängig von dieser Stellung ausgibt. Auf diese Weise ist auch die Bremse des Anhängerfahrzeugs geregelt ansteuerbar.

In dem Anhängersteuerventil 130 ist ferner ein weiteres an sich bekanntes Ventil 134 vorgesehen, welches lediglich den Zweck hat, zu verhindern, dass beispielsweise bei einem Abriss der Druckschläuche zu dem Anhängerfahrzeug der pneumatische Energiespeicher oder Vorratsbehälter V3 in dem Zugfahrzeug entleert wird. In diesem Falle wird das Ventil 134 von der gezeigten durchgängigen Stellung in eine Drosselstellung geschaltet.

Die jeweils an einer Achse angeordneten Radbremseinheiten 103 bzw. 104, deren Betätigungsenergie dem elektrischen Energiespeicher entnommen wird, sind durch Steuersignale, welche das Steuergerät 110 erzeugt, ansteuerbar, wobei die Stellung der Elektromotoren 103a bzw. 104a, welche die Steuergerät 110 rückgemeldet werden, so dass eine geregelte Ansteuerung der Radbremseinheiten 103 bzw. 104 möglich ist. In einem Fehlerfall, beispielsweise bei Ausfall des Bordnetzes wird dem Anhängersteuerventil 130, über die Steuerleitung 42 auf die oben beschriebene Weise ein Steuersignal zugeführt, welches dem Steuersignal entspricht, das den Radbremseinheiten 101, 102 zugeführt wird, die an der anderen Achse angeordnet sind, so dass auch in diesem Störungsfall ein Abbremsen des Fahrzeugs möglich ist.

Bei einer anderen - nicht dargestellten - Ausführungsform kann vorgesehen sein, dass den Radbremseinheiten 101 bzw. 102 zugeordnete Ventilanordnungen vorgesehen sind, welche von dem Steuergerät 110 elektrische Steuersignale empfangen und in pneumatische Steuergrößen zur Betätigung der Radbremseinheiten 101 bzw. 102 umsetzen.

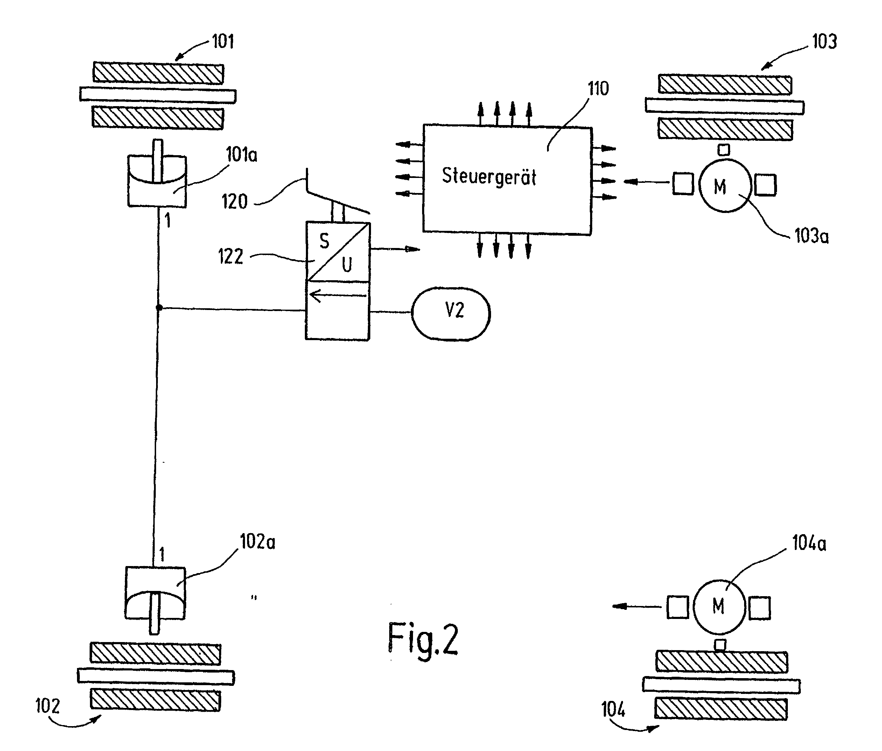

Bei einem zweiten Ausführungsbeispiel, dargestellt in Fig. 2, sind diejenigen Elemente, die mit denen des ersten identisch sind, mit denselben Bezugszeichen versehen, so dass bezüglich deren Beschreibung auf die Ausführungen zum ersten Ausführungsbeispiel voll inhaltlich Bezug genommen wird.

In Fig. 2 ist das elektropneumatische Anhängersteuerventil 130 der Übersichtlichkeit halber weggelassen.

Das in Fig. 2 dargestellte Ausführungsbeispiel unterscheidet sich von dem in Fig. 1 dadurch, dass den Radbremseinheiten 101 bzw. 102 keine Ventileinheiten zugeordnet sind, sondern dass Steuersignale der Radbremseinheiten 101, 102, deren Betätigungsenergie dem pneumatischen Energiespeicher V2 entnommen wird, direkt aus der Stellung des Bremspedals 120 generiert und mittels eines pneumatischen Mediums an die Radbremseinheiten 101 bzw. 102 übertragen werden. Ein bei dieser Bremsvorrichtung vorgesehenes (nicht dargestelltes) elektropneumatisches Anhängersteuerventil kann dabei in einem Fehlerfall neben einem elektrischen Steuersignal auch ein pneumatisches Steuersignal verarbeiten, wobei das dem elektropneumatischen Anhängersteuerventil zugeführte pneumatische Steuersignal dem Steuersignal entspricht, welches den an einer Achse angeordneten Radbremseinheiten 101 bzw. 102 zugeführt wird, deren Betätigungsenergie dem pneumatischen Energiespeicher V2 entnommen wird.

## Patentansprüche

1. Bremsvorrichtung, insbesondere für Nutzfahrzeuge, umfassend eine elektrische Druckmittel-Bremseinrichtung mit Radbremseinheiten (101, 102), deren Betätigungsenergie einem pneumatischen Energiespeicher (V2) entnommen wird, **dadurch gekennzeichnet, dass** zusätzlich eine elektrische Bremseinrichtung vorgesehen ist, mit von einer Steuereinrichtung (110) elektrisch ansteuerbaren ; Radbremseinrichtungen (103, 104), deren Betätigungsenergie einem elektrischen Energiespeicher entnommen wird,! wobei die Radbremseinheiten (101, 102), deren Betätigungsenergie dem pneumatischen Energiespeicher (V2) entnommen wird, der Vorderachse des Fahrzeugs zugeordnet sind, und wobei die Radbremseinheiten (103, 104), deren Betätigungsenergie einem elektrischen Energiespeicher entnommen wird, der Hinterachse des Fahrzeugs zugeordnet sind.

2. Bremsvorrichtung nach Anspruch 1, **dadurch gekennzeichnet, dass** Steuersignale zur Betätigung der Radbremseinheiten (101, 102), deren Betätigungsenergie aus dem pneumatischen Energiespeicher (V2) entnommen wird, direkt in Abhängigkeit von der Stellung eines Bremspedals (120) generiert und mittels eines pneumatischen Mediums an die Radbremseinheit (101, 102) übertragen werden (Fig. 2).

3. Bremsvorrichtung nach Anspruch 1, **dadurch gekennzeichnet, dass** die Steuersignale einem elektropneumatischen Anhängersteuerventil (130) zugeführt werden.

4. Bremsvorrichtung nach Anspruch 1, **dadurch gekennzeichnet, dass** elektrische Steuersignale zur Betätigung der Radbremseinheiten (101, 102), deren Betätigungsenergie dem pneumatischen Energiespeicher (V2) entnommen wird, in der Steuereinrichtung (110) generiert und als elektrische Signale an den Radbremseinheiten (101, 102) zugeordnete Ventileinheiten übertragen werden, welche die elektrischen Steuersignale in pneumatische Größen umwandeln.

5. Bremsvorrichtung nach Anspruch 4, **dadurch gekennzeichnet, dass** ein zusätzlicher redundanter Pfad zur Generierung pneumatischer Steuersignale vorgesehen ist, mit denen wenigstens einer Achse zugeordnete Radbremseinheiten ansteuerbar sind, deren Betätigungsenergie aus dem pneumatischen Energiespeicher (V2) entnommen wird.

6. Bremsvorrichtung nach Anspruch 4, **dadurch gekennzeichnet, dass** dem Anhängersteuerventil (130) zugeführte pneumatische Steuersignale Steuersignalen entsprechen, welche bei Ausfall der elektrischen Bremseinrichtung den an einer Achse angeordneten Radbremseinheiten (101, 102) zuführbar sind, deren Betätigungsenergie dem pneumatischen Energiespeicher (V2) entnommen wird (Fig. 1).

## Claims

1. A braking device, in particular for utility vehicles, comprising an electric pressure medium braking system with wheel brake units (101, 102) the actuating energy for which is taken from a pneumatic energy accumulator (V2),
**characterised in that**
an electrical braking system is provided in addition with wheel brake devices (103, 104) which can be triggered electrically by a control device (110) and the actuating energy for which is taken from an electrical energy accumulator, the wheel brake units (101, 102) the actuating energy for which is taken from the pneumatic energy accumulator (V2) being assigned to the front axle of the vehicle and the wheel brake units (103, 104) the actuating energy for which is taken from an electrical energy accumulator being assigned to the rear axle of the vehicle.

2. A braking device in accordance with claim 1,
**characterised in that**
control signals for actuating the wheel brake units (101, 102) the actuating energy for which is taken from the pneumatic energy accumulator (V2) are generated directly dependant upon the position of a brake pedal (120) and transmitted to the wheel brake unit (101, 102) by means of a pneumatic medium (Fig. 2).

3. A braking device in accordance with claim 1,
**characterised in that**
the control signals are sent to an electro-pneumatic trailer control valve (130).

4. A braking device in accordance with claim 1,
**characterised in that**
electrical control signals for actuating the wheel brake units (101, 102) the actuating energy for which is taken from the pneumatic energy accumulator (V2) are generated in the control device (110) and transmitted as electrical signals to valve units assigned to the wheel brake units (101, 102) which convert the electrical control signals into pneumatic values.

5. A braking device in accordance with claim 4,
**characterised in that**
an additional redundant path is provided for generating pneumatic control signals with which wheel brake units assigned to at least one axle can be triggered, the actuating energy for which is taken from the pneumatic energy accumulator (V2).

6. A braking device in accordance with claim 4,
**characterised in that**
pneumatic control signals sent to the trailer control valve (130) correspond to control signals which can be sent to the wheel brake units (101, 102) assigned to one axle the actuating energy for which is taken from the pneumatic energy accumulator (V2).

## Revendications

1. Dispositif de freinage, notamment pour véhicules utilitaires, comprenant un dispositif électrique de freinage utilisant un fluide comprimé et comportant des unités de frein de roues (101, 102), dont l'énergie d'actionnement est prélevée d'un accumulateur d'énergie pneumatique (V2), **caractérisé en ce qu'**il est prévu en supplément un dispositif électrique de freinage, comportant des dispositifs de freins de roues (103, 104) pouvant être commandé électriquement par un dispositif de commande (110) et dont l'énergie d'actionnement est prélevée d'un accumulateur d'énergie électrique, les unités de freins de roues (101, 102), dont l'énergie d'activation est prélevée de l'accumulateur d'énergie électrique pneumatique (V2), étant associées à l'essieu avant du véhicule, et les unités de freins de roue (103, 104), dont l'énergie d'actionnement est prélevée d'un accumulateur d'énergie électrique, étant associées à l'essieu arrière du véhicule.

2. Dispositif de freinage selon la revendication 1, **caractérisé en ce que** des signaux de commande pour l'actionnement des unités de freins de roues (101, 102), dont l'énergie d'actionnement est prélevée d'un accumulateur d'énergie pneumatique (V2), sont produits directement en fonction de la position d'une pédale de frein (120) et sont transmis à l'unité de frein de roue (101, 102), au moyen d'un fluide pneumatique (figure 2).

3. Dispositif de freinage selon la revendication 1, **caractérisé en ce que** les signaux de commande sont envoyés à une soupape électro-pneumatique de commande de remorque (130).

4. Dispositif de freinage selon la revendication 1, **caractérisé en ce que** les signaux de commande électrique pour l'actionnement des unités de freins de roues (101, 102) dont l'énergie d'actionnement est prélevée de l'accumulateur d'énergie pneumatique (V2), sont produits dans le dispositif de commande (110) et sont transmis en tant que signaux électriques à des unités de soupape associées aux unités de freins de roues (101, 102), qui convertissent des signaux de commande électriques en des grandeurs pneumatiques.

5. Dispositif de freinage selon la revendication 4, **caractérisé en ce qu'**il est prévu un trajet supplémentaire redondant pour la production de signaux de commande pneumatiques, à l'aide desquels peuvent être commandées des unités de freins de roues, qui sont associées au moins à un essieu, et dont l'énergie d'actionnement est prélevée de l'accumulateur d'énergie pneumatique (V2).

6. Dispositif de freinage selon la revendication 4, **caractérisé en ce que** des signaux de commande pneumatiques envoyés à la soupape de commande (103) de la remorque correspondent à des signaux de commande qui, lors de la défaillance du dispositif de freinage électrique, peuvent être envoyés aux unités de freins de roues (101, 102) disposées sur un essieu et dont l'énergie d'actionnement est prélevée de l'accumulateur d'énergie pneumatique (V2) (figure 1).
